# EUROPEAN PATENT SPECIFICATION

(11) **EP 3 639 071 B1**
(45) Date of publication and mention of the grant of the patent: **11.09.2024**
(21) Application number: 18816694.6
(22) Date of filing: 14.06.2018
(51) Int. Cl.: G02B 6/02, G02B 6/028, G01B 11/16, G01L 1/24, C03B 37/012, C03B 37/027

(54) **OPTICAL FIBER WITH INTEGRATED ABSORBER MATERIAL**
OPTISCHE FASER MIT INTEGRIERTEM ABSORBERMATERIAL
FIBRE OPTIQUE À MATÉRIAU ABSORBANT INTÉGRÉ

(30) Priority: 16.06.2017 US 201762520929 P
(43) Date of publication of application: 22.04.2020
(73) Proprietor: Intuitive Surgical Operations, Inc., Sunnyvale, CA 94086 (US)
(72) Inventor: SANBORN, Eric E., Sunnyvale, California 94086 (US); FROGGATT, Mark E., Sunnyvale, California 94086 (US)
(74) Representative: MacDougall, Alan John Shaw
(86) International application number: PCT/US2018/037625
(87) International publication number: WO 2018/232172

(56) References cited:
- EP-A1- 0 505 581
- CN-A- 105 158 844
- JP-A- S56 113 104
- US-A- 4 770 492
- US-A1- 2002 176 677
- US-A1- 2005 084 222
- US-A1- 2006 239 610
- US-B1- 6 243 522
- WESTBROOK PAUL S ET AL: "Continuous Multicore Optical Fiber Grating Arrays for Distributed Sensing Applications", JOURNAL OF LIGHTWAVE TECHNOLOGY, IEEE, USA, vol. 35, no. 6, 15 March 2017 (2017-03-15), pages 1248 - 1252, XP011645653, ISSN: 0733-8724, [retrieved on 20170412], DOI: 10.1109/JLT.2017.2661680

## Description

### CROSS-REFERENCE TO RELATED APPLICATIONS

This application claims the benefit of priority to U.S. Patent Provisional Application No. 62/520,929, filed on June 16, 2017.

### TECHNICAL FIELD

This disclosure relates to multicore optical fibers and their manufacture.

### BACKGROUND

Multicore optical fibers can be used as distributed optical sensors to measure, e.g., bend, twist, axial strain, and/or temperature along the fiber. From these measurements, the two-dimensional or three-dimensional shape of the fiber can be calculated. Fiber shape sensing is useful, for example, in computer-aided or manual procedures where shape sensing is used to aid in determining the configuration or computer-operated or manual tools. In robotically assisted procedures, shape sensing can be used to aid in determining the configuration of robotic elements, or tools manipulated by the robotic elements. As a specific medical example, fiber shape sensing better enables precise determination of the location of a tool near or within the patient's body based on a measurement of the three-dimensional fiber shape, in diagnostic or therapeutic procedures such as: data gathering, sample collection, and surgery.

Accurate three-dimensional shape calculations generally involve measurements from at least four waveguide cores of the fiber: a central waveguide core and three or more peripheral waveguide cores. Optical frequency-domain reflectometry may be used to interrogate each waveguide core, giving a high-resolution mapping of strain along the fiber. Twist can be measured by looking at the difference in common mode strain between all the outer waveguide cores and the central waveguide core. For example, if the fiber is spun during fabrication, the intrinsic twist created thereby in the peripheral waveguide cores allows for discrimination between twist directions.

During operation, some of the light in the waveguide cores can escape into the cladding. Such escaped light that does not exit the fiber can: reenter the same waveguide core at another location, enter another waveguide core, or stay in the cladding and potentially enter one of the waveguide cores at another location. Light that enters a different waveguide core, or that reenters the same waveguide core, can decrease the accuracy of the optical sensor since the total time of flight is uncontrolled.

For example, light can leave a core of a fiber and directly couple into another core of the fiber, separate from any discontinuities in the fiber, such as, e.g., connectors or splices.

As another example, at discontinuities in the fiber, such as, e.g., connectors or splices, some of the light in the waveguide cores is more likely to escape into the cladding of the fiber. While resulting in some decrease in signal levels, this is generally not problematic as long as the light lost to the cladding travels to the outer surface of the cladding and interacts with the surrounding fiber coating to be stripped out and absorbed or dissipated (e.g., by scattering off irregularities into the ambient air). On the other hand, if light is not effectively removed from the cladding, it can couple back into one or more of the waveguide cores at another discontinuity, resulting in mixing of signals of different waveguide cores, which undermines the accuracy of the measurements. Unfortunately, not all coatings effectively facilitate removal of light from the cladding. For example, silicone coatings, which have desirable characteristics for some applications, such as biocompatibility or ultraviolet transparency, have a lower refractive index than the fused-silica claddings commonly employed in optical fibers. Fiber sensors with such coatings can fail to strip out light travelling in the cladding due to greater likelihood of total internal reflection at the cladding-coating interface.

Westbrook Paul S., et al: "Continuous Multicore Optical Fiber Grating Arrays for Distributed Sensing Applications," Journal of Lightwave Technology, IEEE, USA, vol. 35, no. 16, 15 March 2017, pages 1248-1252, XP011645653, ISSN 0733-8724, DOI: 10.1109/JLT.2017.2661680 describes the fabrication and distributed sensing capabilities of very long continuous fiber grating sensor arrays in a twisted multicore fiber. The continuous gratings are fabricated in fibers with UV transparent coating using a flexible and scalable reel-to-reel processing system. Single-frequency continuous gratings are characterized using optical frequency-domain reflectometry and a shape reconstruction algorithm to measure fiber bend radius. Broadband reflection gratings are shown to act as enhanced quasi-Rayleigh scattering elements allowing for distributed temperature measurements in the presence of 10-dB transmission loss.

JP S56 113104 discloses reducing both the transmission loss and the crosstalk by providing a light absorption layer on the circumference of the clad part surrounding the core part of a multicore fiber. One piece each of the base metal is inserted into the quartz pipe which has been doped approximately 500ppm with V2O5 forming a light absorption layer, also plural pieces of same are put into one large-sized quartz jacket pipe, the space is filled with a quartz fiber as packing, and after that, the collapse processing is performed. As a result, a multicore fiber having plural fiber strands consisting of a core, a clad, a quartz jacket part and a light absorption layer can be obtained in the fiber body made of quartz. In this way, both the transmission and the crosstalk can be reduced.

### SUMMARY

The present invention is defined in the independent claims, with optional features being defined in the dependent claims. In approaches described herein, the removal of light from the cladding of an optical fiber sensor is achieved through the addition of an absorber material to a helical core of a plurality of cores, where the helical core is an unused core of the optical fiber sensor. An absorber material is herein understood as a material that is absorptive to light at least in a wavelength band in which the optical fiber is configured to operate as a sensor. A waveguide core is "unused" when it is not intended for sensing in the wavelength band of the optical fiber when the sensing cores are sensing in the wavelength band. Such an unused waveguide core may be used only to help remove light from the cladding, or be used for a variety of other purposes other than sensing in the wavelength band when the sensing cores are sensing in the wavelength band. For optical fibers used as sensors in the optical and near-infrared wavelength regime, for example, suitable absorber materials include, without limitation, erbium, ytterbium, thulium, neodymium, chromium, and/or cobalt.

In accordance with various examples, the optical fiber is manufactured from a preform of stacked rods. Some of the stacked rods include doped cores to form the plurality of waveguide cores (e.g., one or more sensing cores and/or one or more unused cores). The fiber may be spun during production such that, in the finished fiber, one or more peripheral waveguide cores are helically wound about the central waveguide core and can be termed helical cores. The absorber material may be distributed throughout the rods (e.g., one or more of the rods that do not include doped cores), deposited in the interspatial areas between the rods, and/or added as dopants to cores that are not intended for use as sensing cores. Absorption of light by the absorber material in the cladding and/or unused waveguide cores obviates the need for the coating to remove light from the cladding to avoid mixing of signals, and thereby facilitates the use of coating materials with low refractive indices, such as, e.g., silicone.

In an aspect, an optical fiber sensor for three-dimensional shape sensing is configured to operate in a wavelength band. The fiber sensor comprises a cladding, a plurality of sensing cores, and a coating. The plurality of sensing cores is in the cladding and extends along a length of the fiber sensor. The plurality of cores includes a central core used as a sensing core in the wavelength band, a first helical peripheral core used as a sensing core in the wavelength band, a second helical peripheral core used as a sensing core in the wavelength band, a third helical peripheral core used as a sensing core in the wavelength band, and a fourth helical peripheral core not used for sensing in the wavelength band. The coating surrounds the cladding, and has a refractive index smaller than a refractive index of the cladding. The fourth helical peripheral core not used for sensing in the wavelength band comprises an absorber material absorptive to light in the wavelength band.

In another aspect, a method of manufacturing a multicore optical fiber sensor for three-dimensional shape sensing configured to operate in a wavelength band comprises providing a fiber preform, drawing and simultaneously spinning the fiber preform to create a fiber, and coating the fiber with a coating material. The fiber preform comprises a plurality of doped cores comprising a central doped core, a first peripheral doped core, a second peripheral doped core, a third peripheral doped core, and a fourth peripheral doped core, wherein the central, first peripheral, second peripheral, and third peripheral doped cores are to be used as sensing cores in the wavelength band wherein the fourth peripheral doped core is not to be used as a sensing core in the wavelength band, wherein the fourth peripheral doped core is created by deposition of a dopant on an interior surface of a silica tube, and then collapsing the tube to create a doped rod, the dopant comprising an absorber material absorptive to light in the wavelength band. Drawing and simultaneously spinning the fiber preform creates helical waveguide cores for the fiber; the helical waveguide cores are formed from multiple doped cores of the plurality of doped cores. The coating material has a refractive index that is smaller than a refractive index of the doped cores.

A fiber-optic sensing system comprises a multicore optical fiber assembly. The multicore optical fiber assembly comprises multiple fiber segments optically coupled to each other at one or more discontinuities. A distal fiber segment of the multiple fiber segments comprises a plurality of waveguide cores embedded in a cladding. At least some waveguide cores of the plurality of waveguide cores are to be used as sensing cores in a wavelength band. An absorber material is in at least one of the cladding and an unused waveguide core of the plurality of waveguide cores. The unused waveguide core is not used for sensing in the wavelength band. The absorber material being absorptive to light in the wavelength band in which the sensing cores. The multicore optical fiber assembly does not include a mode stripper in the distal fiber segment.

There is disclosed a multicore optical fiber sensor including a cladding (e.g., made of fused silica), a plurality of waveguide cores embedded in the cladding, and, surrounding the cladding, a coating (e.g., made of silicone or another polymer) having a refractive index that is smaller than the refractive index of the cladding. At least some (but not necessarily all) of the waveguide cores are to be used as sensing cores. The cladding and/or one or more helically wound unused waveguide core(s) not used for sensing in the same band as the sensing cores include an absorber material that is absorptive to light in a wavelength band in which the fiber sensor is configured to operate.

In another example, a method of manufacturing a multicore optical fiber sensor (e.g., as described above) is provided. The method includes providing a fiber preform including a plurality of doped cores and an absorber material absorptive to light in a wavelength band in which the fiber sensor is to operate; drawing and simultaneously spinning the fiber preform to create a fiber sensor with helical waveguide cores formed from the doped cores, and coating the fiber sensor with a coating material having a refractive index that is smaller than a refractive index of the rods. The coating material may be at least partially transparent to ultraviolet light, in which case the method may further include optically writing fiber Bragg gratings (FBGs) into the waveguide cores through the coating material. The fiber preform may be created from a plurality of stacked rods, with doped cores extending along center axes of some of the rods. Creating the fiber preform may include distributing the absorber material throughout at least some of the stacked rods; depositing the absorber material on the interior surface(s) of one or more rods whose doped cores will form waveguide cores not to be used as sensing cores; or depositing the absorber material in interspatial areas between the stacked rods. The method further includes coating the preform with a coating material having a refractive index that is smaller than a refractive index of the rods. The coating material may be at least partially transparent to ultraviolet light, in which case the method may further include optically writing fiber Bragg gratings into the waveguide cores through the coating material.

A fiber-optic sensing system incorporating a multicore optical fiber is described. In this system, the multicore optical fiber takes the form of a fiber assembly comprising two or more fiber segments optically coupled to each other at one or more discontinuities. The fiber segments include a plurality of waveguide cores embedded in a cladding, and at least some of the waveguide cores are to be used as sensing cores. At least a distal one of the fiber segments includes an absorber material in at least one of the cladding and an unused one of the waveguide cores (meaning in the cladding and/or in an unused one of the waveguide cores). The multicore optical fiber assembly does not include a mode stripper in the distal fiber segment (or, in some embodiments, anywhere else in the assembly). The system may also include a plurality of single-mode fibers coupled, via a fan-out module, to a proximal end of the waveguide cores of the multicore optical fiber assembly, and an optical interrogator coupled to proximal ends of the single-mode fibers.

### BRIEF DESCRIPTION OF THE DRAWINGS

The foregoing will be more readily understood from the following description of various example embodiments, in particular, when taken in conjunction with the accompanying drawings, in which:
FIGS. 1A and 1B are cross-sectional and perspective views, respectively, of an example optical fiber in accordance with various embodiments.
FIG. 2A is a cross-sectional view of an example fiber preform;
FIG. 2B is a cross-sectional view of an example fiber preform with an absorber material integrated into a doped core that will form a waveguide core not intended for use as a sensing core, in accordance with various embodiments;
FIG. 2C is a cross-sectional view of an example fiber preform with an absorber material distributed throughout the cladding;
FIG. 2D is a cross-sectional view of an example fiber preform with an absorber material integrated into the interspatial areas between the rods;
FIG. 3 is a flow chart of a method for fabricating multicore optical fibers with integrated absorber materials in accordance with various embodiments; and
FIG. 4 is a block diagram illustrating a fiber-optic sensing system employing an optical fiber with integrated absorber material, in accordance with various embodiments.

The drawings use various fill patterns to visually distinguish between different types of components, but without any intent to denote particular materials.

### DETAILED DESCRIPTION

Described herein are multicore optical fibers with an absorber material integrated into the cladding and/or into one or more unused waveguide cores of the fiber, as well as methods of manufacturing such fibers and systems in which they may be employed.

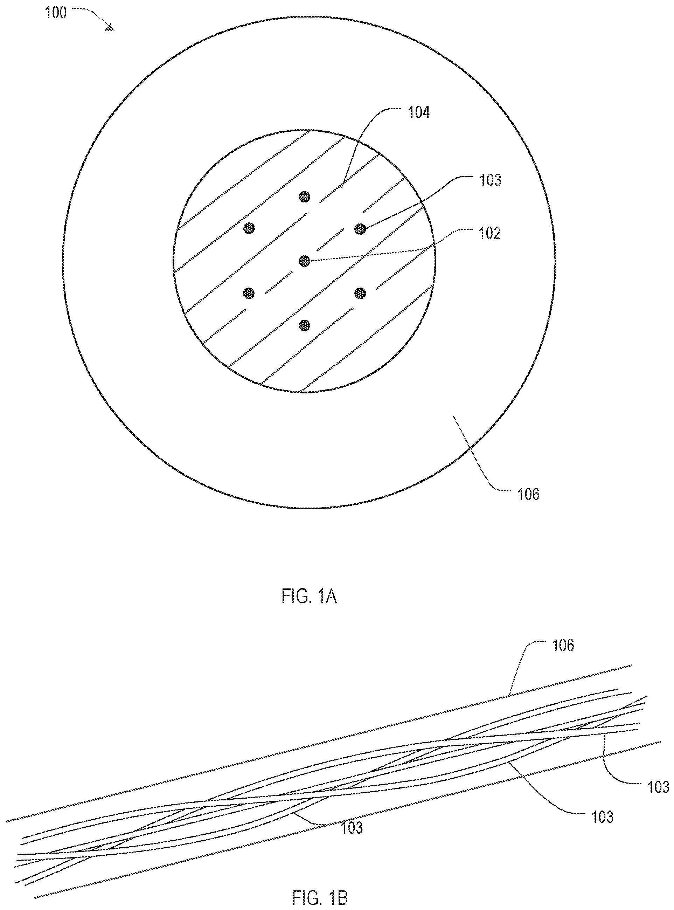

FIGS. 1A and 1B are cross-sectional and perspective views, respectively, of an example optical fiber 100 in accordance with various embodiments. With reference to FIG. 1A, the depicted fiber 100 includes seven waveguide cores embedded in a solid cladding 104: a central waveguide core 102 and six peripheral waveguide cores 103 that are helically wound around the central waveguide core 102. The cladding 104 may be made of fused silica, and the waveguide cores 102, 103 may be formed therein by adding dopants (e.g., germanium) that raise the refractive index, causing light to be guided within the waveguide cores 102, 103. While FIGS. 1A and 1B depict a multicore fiber with seven waveguide cores 102, 103, fibers with more or fewer waveguide cores (for three-dimensionally shape-sensing applications generally at least four, for sensing one-dimensional strain with as few as a single sensing core) can also be used, and the principles discussed herein generally apply regardless of the number of waveguide cores. Thus, the techniques described herein can be applied to an optical fiber with a single sensing core, two sensing cores, four sensing cores, six sensing cores, or any other number of sensing cores. In the invention the optical fiber comprises four sensing cores. Also, although FIGS. 1A and 1B show a fiber with six peripheral waveguide cores 103 helically wound around a central waveguide core 102, the techniques described herein can also be applied to optical fibers with cores disposed in other geometries in the fiber, including fibers with no central sensing core, no peripheral sensing core(s), no helically wound cores, etc.

The cladding 104 is surrounded by a coating 106. The coating helps to protect the fiber 100 from external damage. For certain medical applications, such as applications that involve insertion of the fiber 100 into a patient's body, it may be beneficial to make the coating 106 from a biocompatible material such as, for example, silicone or a fluoropolymer, whose refractive indices are lower than that of silica. These materials also have the advantage of being at least partially transparent to UV light. Thus, coatings made of these materials can be made sufficiently transparent to ultraviolet light to allow for the writing of optical gratings (e.g., FBGs) through such materials and into the waveguides. Such gratings can be used to enable or to facilitate some types of measurements. The choice of coating materials that are in some respects beneficial can entail a refractive index of the coating material that is lower than that of the cladding 104, at least over a wavelength range encompassing the wavelength band of operation. For example, the refractive index of silicone is lower than that of fused silica. A low refractive index (compared to that of the cladding), however, renders the coating ineffective in removing stray light (herein understood as light not retained within the sensing waveguide cores) from the cladding. In accordance herewith, this insufficiency is addressed at least in part by rendering a portion of the fiber absorptive to light in the wavelength band in which the fiber is intended to operate. In the invention the fourth helical peripheral core comprises a suitable absorber material. In addition the insufficiency is optionally further addressed by incorporating a suitable absorber material into the cladding 104 (that is, at least portions of the cladding 104), as conceptually indicated by hatching in FIG. 1A. Additionally to having absorber material distributed through the cladding, one of the waveguide cores, is not used for sensing, and is replaced by an absorptive waveguide helical core (not shown). For example, in various shape-sensing applications employing seven-core fibers, four of the seven waveguide cores 102, 103 (the central waveguide core 102 and three peripheral waveguide cores 103) are used to measure shape, a fifth waveguide core 103 is used to measure temperature, and a sixth waveguide core 103 is used for a redundant calculation check, such as for safety. This leaves one waveguide core 103 that is not used for sensing purposes. This waveguide core 103 may be simply replaced by a core including the absorber material.

In accordance with various embodiments, a multicore optical fiber (e.g., fiber 100) is manufactured from a fiber preform by drawing the preform on a fiber tower. The preform may have a diameter much larger than that of the finished fiber, and the cross-section of the preform can resemble a larger version of the cross-section of the finished fiber. To construct the preform, rods (e.g., glass rods) may be stacked, e.g., in a hexagonal grid, and an outer tube may then be collapsed around the stack of rods. Some of the rods in the stack may be doped in a region surrounding the center axis of the rods, e.g., with germanium, to provide the waveguide cores. These core-forming rods themselves may be made by depositing the dopant on the interior surface of a tube and then collapsing the tube (e.g., by pulling the tube under heat and vacuum). The other rods may be uniform and, together with the tubes of the waveguide-forming rods and the outer tube, form the cladding. Alternatively to stacking and collapsing rods, the preform may be created by drilling bores into a silica preform and then inserting doped-silica rods into the bores (not claimed) Either way, while the fiber is being drawn, it may be physically spun such that, as shown in FIG. 1B, the peripheral waveguide cores 103 (only three being shown) form helices about the center axis. Various embodiments of fiber preforms including stacked rods will now be described in more detail.

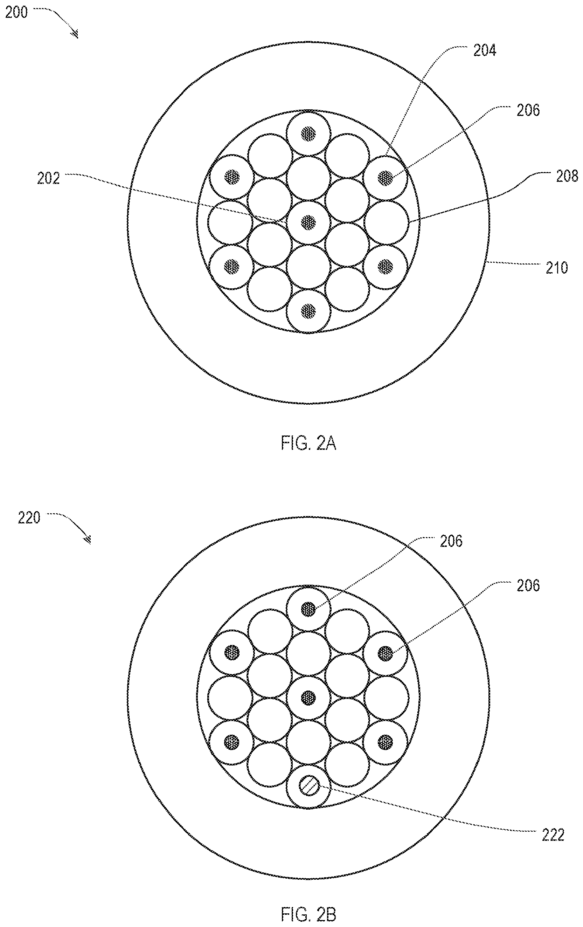

FIG. 2A (not part of the invention) is a cross-sectional view of an example fiber preform 200 for a seven-core fiber. The preform 200 includes nineteen rods in a hexagonal arrangement. The center rod 202 and six of the peripheral rods 204 include doped cores 206, arranged along the rod axes, that are to form the waveguide cores of the fiber. The remaining twelve rods 208 are of a uniform cladding material. Also shown is the outer tube 210 that surrounds the nineteen rods 202, 204, 208. Following assembly of the fiber preform 200, the preform 200 can be collapsed into a solid rod, which closes the interspatial areas (or "gaps") between the rods and between the outer tube 210 and the rod arrangement. The collapsed preform may then be drawn (and simultaneously spun) to form an optical fiber with one or more helically wound waveguide cores.

FIG. 2B is a cross-sectional view of a fiber preform 220 with an absorber material integrated into the doped core 222 that will form the unused waveguide core, in accordance with various embodiments. The unused core 222 is doped, in lieu of or in addition to the dopant used in the other doped cores 206 (e.g., germanium), with an absorber material, or combination of absorber materials, such as, e.g., erbium, ytterbuim, thulium, neodymium, chromium, and/or cobalt. In this embodiment, an absorber material that increases the refractive index (as is the case for most absorptive dopants, including the ones of the above list except for cobalt) is beneficial, as it will cause the core 222 to form a waveguide that helps retain captured light, increasing the overall absorption of light along the length of the waveguide. Further, since the fiber is spun, even a single peripheral waveguide core such as the waveguide core formed by doped core 222 will sweep around the cladding and help collect and absorb stray light. Light collection is increased if the absorptive waveguide core formed by doped core 222 has a larger cross-section than the sensing waveguide cores, as can be achieved by making the doped core 222 forming the absorptive waveguide larger than the other doped cores. In some embodiments, the rod depicted to include the doped core 222 may even be replaced in its entirety with an absorber material or have absorber material distributed throughout the rod.

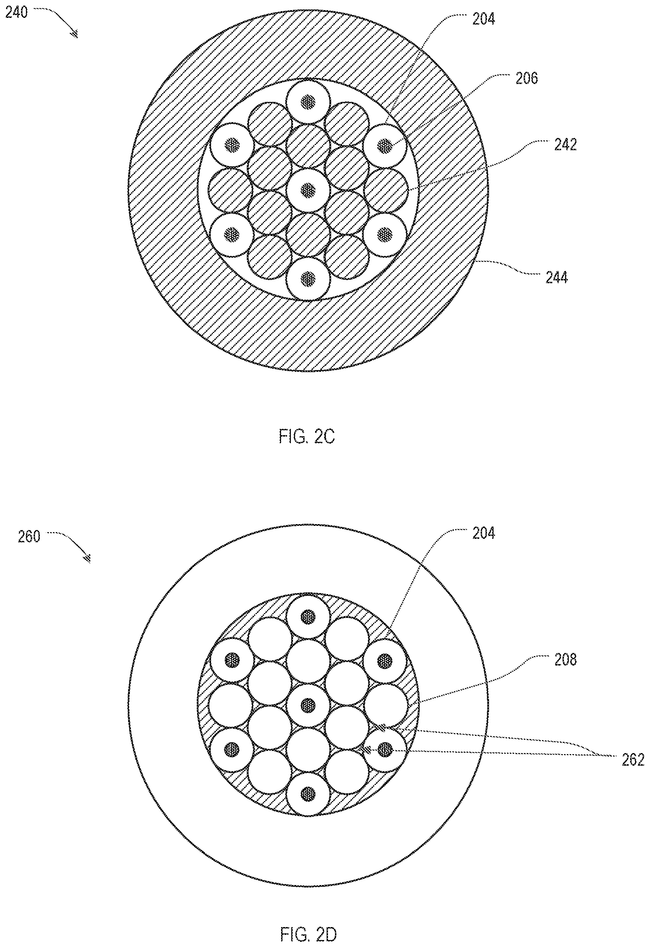

FIG. 2C (not part of the invention) is a cross-sectional view of a fiber preform 240 with an absorber material distributed throughout the cladding, in accordance with various alternative embodiments. Here, the rods 204 that include doped cores 206 to form the waveguide cores of the fiber are left untouched, and the absorber material is added to the remaining rods 242 and/or the outer tube 244 surrounding the stack of rods, making up a certain percentage (up to 100%) of the volume of the rods 242 and/or outer tube 244. For example, in some embodiments, one or more of the silica rods that do not include doped cores are doped throughout or in rod portions with the absorber material. It is also possible to incorporate absorber material into the core-forming rods 204. For this purpose, absorber materials that increase or at least do not (or not significantly) decrease the refractive index of the cladding, such as fluorine or cobalt, may be used to avoid affecting the light-guiding characteristics of the sensing waveguide cores. Alternatively, if low-refractive-index absorber materials are used in the waveguide-forming rods 204, the core chemistry may need to be modified, e.g., by adding dopants that further increase the refractive index of the core material, to ensure that the cores have a higher refractive index than the surrounding cladding and can fulfill their light-guiding function in the finished fiber.

FIG. 2D (not part of the invention) is a cross-sectional view of a fiber preform 260 with an absorber material integrated into the interspatial areas between the rods, in accordance with various embodiments. In this case, standard pure silica rods (some with doped cores to form the waveguide cores) may be stacked, and prior to collapsing the assembly into a solid rod and closing up the interspatial areas between the rods, the absorber material may be deposited in the interspatial areas 262 (pointed to by the arrowheads in FIG. 2D).

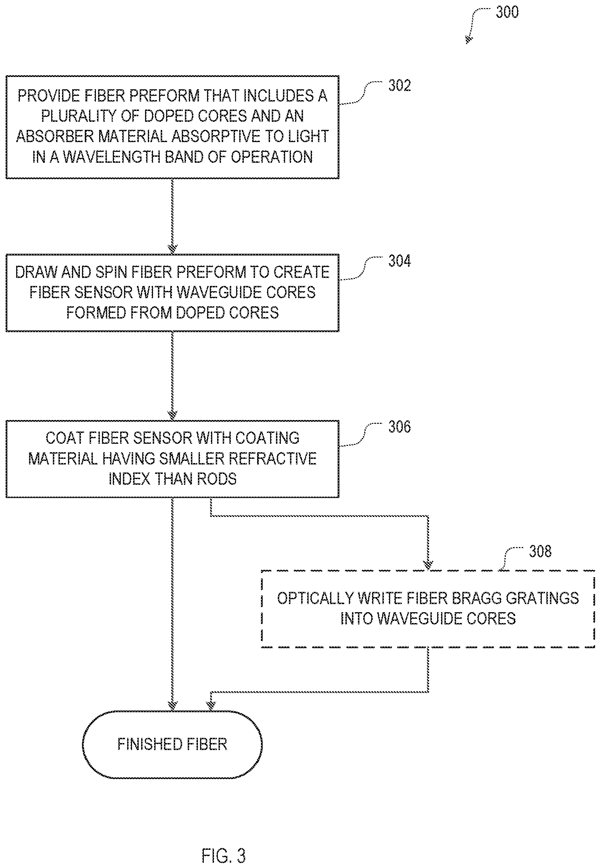

FIG. 3 is a flow chart of a method 300 for fabricating multicore optical fibers with integrated absorber materials in accordance with various embodiments. The method includes providing a fiber preform that includes a plurality of doped cores and an absorber material absorptive to light in a wavelength band of operation (act 302). The absorber material may be integrated in the cladding and/or in one or more of the doped cores that will form waveguide cores not intended for use as sensing cores. As described with respect to FIGS. 2A-2C, the fiber preform may be made from an arrangement of rods, some of which include doped cores. To create a rod with a doped core, in a process known as modified chemical vapor deposition (MCVD), gas containing the dopant (which may include the dopant to form a sensing core or an absorbing core) may be flown through a tube of the cladding material (e.g., silica) while the tube is being heated with a torch, causing the gas to react on the interior surface of the tube to form the desired dopant-containing deposit. The tube can then be collapsed into a solid rod. Alternatively, a preform with doped cores may be created, e.g., by inserting solid doped rods into bores of a solid larger-diameter rod of cladding material (not claimed). To add absorber material to the cladding, MCVD may be used to deposit dopant at the interior surface of the outer tube 210 collapsed around the absorber material. Similarly to MCVD, outside vapor deposition may be used to deposit dopant on the exterior surface of a tube or rod, resulting, upon assembly and collapse of multiple rods into a preform, in doped interspatial regions between the rods. Interspatial doping may also be achieved through solution doping, where a solution of the desired dopant material is flowed through the assembled structure prior to collapse, and the structure is then heated to dry the solution, leaving behind the desired material. Yet another method involves dip coating the assembled preform, prior to collapse, into a solution (the "sol" for a sol-gel process) having the dopant dissolved therein (e.g., by immersing the preform into the sol and then draining, leaving a layer of sol behind on the various exposed surfaces), polymerizing the sol to form a gel, and then drying and sintering the gel; a portion of the dopant present within the gel may diffuse into the adjacent cladding material in the process. Various other methods for creating a suitably doped preform may occur to those of ordinary skill in the art. In general, the subsequent steps for generating a fiber from the preform are agnostic as to the way in which the preform itself was manufactured (as long as it includes the absorber material in accordance herewith).

Returning to the description of FIG. 3, the fiber preform is heated (e.g., to melting) and drawn in the axial direction to form an optical fiber of much smaller diameter and greater length (act 304). During the drawing process, the fiber is moreover spun, causing the peripheral doped cores that will form the peripheral waveguide cores of the finished fiber to be helically wound about the central axis of the fiber (where the central waveguide core is located). The fiber is then coated with a coating material such as silicone or another low-index polymer (act 306), e.g., by pulling the fiber through a bath of the coating material and curing the resulting thin coating layer. In some embodiments, this completes the fiber-fabrication process. In other embodiments, following application of the coating, gratings (e.g., FBGs) are optically written into the waveguide cores (act 308, indicated as optional by dashed lines).

The above-described embodiments of multicore optical fibers with integrated absorber materials free the choice of fiber coating materials from refractive-index considerations, enabling the use of fiber coatings with low refractive index without the risk of signal mixing due to unchecked stray light propagation in the cladding. In addition, the absorption of light in the cladding by the absorber material can simplify and reduce the cost of systems in which the fibers are employed by obviating the need for separate components conventionally used to eliminate light lost to the cladding, such as mode strippers placed along the fiber.

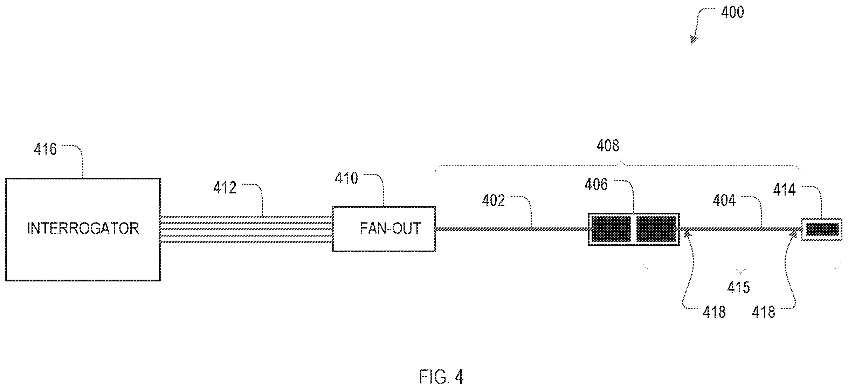

FIG. 4 is a block diagram that illustrates a fiber-optic sensing system 400 employing a multicore optical fiber with integrated absorber material, in accordance with various embodiments. The multicore optical fiber includes multiple discrete fiber segments 402, 404 coupled to each other via one or more fiber-optic connectors 406 to form a multicore optical fiber assembly 408. The fiber-optic connector(s) 406 may each mechanically couple and align the fiber cores of the two meeting ends of the respective fiber segments 402, 404. As an alternative to employing fiber-optic connectors 406, the fiber segments 402, 404 may be spliced (i.e., joined end-to-end using heat). While only two fiber segments 402, 404 and a single fiber-optic connector 406 are shown in FIG. 4, it is to be understood that the optical fiber assembly 408 may, in some embodiments, include three or more coupled fiber segments. The multicore optical fiber assembly 408 is coupled at one end (herein also the "proximal end"), via an optical fan-out element 410, to a plurality of single-core fibers 412. At the other end (herein also the "distal end"), the distal fiber segment 404 of the optical fiber assembly 408 ends (usually) in a termination element 414 such as, e.g., a taper. (In principle, it is also possible for the distal fiber segment to terminate simply in a cross-sectional cut.) In shape-sensing or other distributed optical sensing applications, the distal fiber segment 404, along with the distal portion of the fiber connector 406 and the termination element 414, is used as the sensing fiber 415, e.g., to determine the location of a medical or other instrument co-located with the distal end of the multicore optical fiber. The multicore optical fiber is interrogated by an optical interrogator 416 coupled to the plurality of single-core fibers 412 at their proximal ends. The optical interrogator 416 may include, for instance, a laser or other light source, one or more interferometers, as well as detectors and associated acquisition electronics.

The multicore optical fiber, due to its segmentation, includes multiple discontinuities where the segments are spliced or coupled via fiber-optic connector(s) 406. At these discontinuities as well as where the fiber terminates (e.g., at termination element 414), light can couple from the waveguide cores into the surrounding cladding, launching cladding modes travelling in either direction along the fiber. When these cladding modes encounter the next discontinuity, they can re-enter the waveguide cores, resulting in undesirable signal mixing. For example, light reflected at the termination element 414 and travelling backward through the cladding of the distal fiber segment 404 can be reflected again, and coupled back into the waveguide cores, at the fiber-optic connector 406. To avoid such cladding-mediated cross-coupling between waveguide cores, many fiber-optic sensing systems include one or more mode strippers at or near the discontinuities or termination to strip out cladding modes. A mode stripper may be implemented, for example, as a small-radius local bend in the fiber that allows the cladding light to exceed the angle of total internal reflection and, thus, exit into the coating. In order to maintain a predominately straight section of fiber, the bend may be an S-bend or a small-diameter full loop in the fiber. Mode strippers may be placed, for example, in the distal fiber segment 404 at locations 418, right after the fiber-optic connector 406 (or splice) and/or right before the termination element 414. However, mode strippers increase the cost and size of fiber-optic sensing systems, and are in some circumstances not usable, e.g., due to size constraints placed on the system. Beneficially, the inclusion of absorber material in the cladding or unused waveguide core(s) of the multicore optical fiber as proposed herein (and described, e.g., with respect to FIGS. 2B-2D) may obviate the need for mode strippers.

The technique described herein provide a number of potential advantages, including reducing the opportunity for light that escapes from a waveguide core in a fiber to enter that same waveguide core or another waveguide core in the fiber. This can provide greater design freedom for optical fibers. As a specific example, a multi-core fiber that utilizes a cladding and multiple optical cores has a limit on how close cores can be relative to each other before an unacceptable amount of crosstalk between the cores occurs for particular applications of the multi-core fiber. This can limit the number of optical cores that the fiber can contain, limit the size or shape of the fiber, and the like. Including absorber material absorptive to light in the operating wavelength band of such a fiber, such as in one or more cores not used for sensing, in the cladding (not claimed), or in both core(s) and cladding can reduce such crosstalk; this can enable smaller fiber structures, increase the number of optical cores in the fiber, or both. Smaller fiber structures can be used in smaller confines, and can also be made to allow tighter bends or smaller curves. More optical cores can provide sensing capability for a larger number of parameters, or more accurate sensing. This technique can be used independently of, or along with, other methods of ameliorating crosstalk such as: increasing the light guiding ability of the core by adjusting core materials, dopant levels, or dopant materials, including mechanical structures such as trenches to depress the index of the material surrounding the core, etc.

While the disclosed subject matter has been described and explained herein with respect to various example embodiments, these examples are intended as illustrative only and not as limiting. Various modifications, additional combinations of features, and further applications of the described embodiments that do not depart from the scope of the subject matter may occur to those of ordinary skill in the art. Accordingly, the scope of the inventive subject matter is to be determined by the scope of the following claims.

## Claims

1. An optical fiber sensor (100) for three-dimensional shape sensing, configured to operate in a wavelength band, the optical fiber sensor (100) comprising:
a cladding (104);
a plurality of cores (102, 103) in the cladding and extending along a length of the fiber sensor (100), the plurality of cores (102, 103) including a central core (102) used as a sensing core in the wavelength band, a first helical peripheral core (103) used as a sensing core in the wavelength band, a second helical peripheral core (103) used as a sensing core in the wavelength band, a third helical peripheral core (103) used as a sensing core in the wavelength band, and a fourth helical peripheral core not used for sensing in the wavelength band; and
a coating (106) surrounding the cladding (104), the coating (106) having a refractive index smaller than a refractive index of the cladding (104),
wherein the fourth helical peripheral core (103) comprises an absorber material absorptive to light in the wavelength band.

2. The fiber sensor (100) of claim 1, wherein the coating (106) is substantially made of a polymer, and the cladding comprises fused silica.

3. The fiber sensor (100) of claim 1, wherein the coating (106) is at least partially transparent to ultraviolet light.

4. The fiber sensor (100) of claim 1, wherein the absorber material comprises one or more of a material selected from the group consisting of: erbium, ytterbium, thulium, neodymium, chromium, and cobalt.

5. The fiber sensor (100) of claim 1, wherein the cladding (106) and the plurality of cores (102, 103) are formed from a preform (220) of stacked rods (202, 204, 208), and wherein the central core, the first helical peripheral core, the second helical peripheral core, and the third helical peripheral core are formed from stacked rods (202, 204) comprising a doped core (206), and wherein the fourth helical peripheral core is formed from a stacked rod (204) comprising a doped core (222) including the absorber material.

6. The fiber sensor (100) of claim 1, wherein the cladding (104) also comprises the absorber material.

7. The fiber sensor (100) of claim 6, wherein the cladding (104) and the plurality of cores (102, 103) are formed from a preform (220, 240) of stacked rods (202, 204, 208), and wherein the absorber material is distributed throughout at least some of the stacked rods (242).

8. The fiber sensor (100) of claim 6, wherein the cladding (104) and the plurality of cores (102, 103) are formed from a preform (220, 260) of stacked rods (202, 204, 208) with the absorber material deposited in interspatial areas (262) between the stacked rods (202, 204, 208).

9. A method of manufacturing a multicore optical fiber sensor (100) for three-dimensional shape sensing, the multicore optical fiber sensor (100) configured to operate in a wavelength band, the method comprising:
creating a fiber preform (220) from a plurality of stacked rods (202, 204, 208), the fiber preform (220) comprising a plurality of doped cores (206, 222) extending along axes of a set of the plurality of stacked rods (202, 204), the plurality of doped cores comprising a central doped core (206), a first peripheral doped core (206), a second peripheral doped core (206), a third peripheral doped core (206), and a fourth peripheral doped core (222), wherein the central, first peripheral, second peripheral, and third peripheral doped cores (206) are to be used as sensing cores in the wavelength band, wherein the fourth peripheral doped core (222) is not to be used as a sensing core in the wavelength band, wherein the fourth peripheral doped core (222) is created by deposition of a dopant on an interior surface of a silica tube, and then collapsing the tube to create a doped rod, the dopant comprising an absorber material absorptive to light in the wavelength band;
drawing and simultaneously spinning the fiber preform (220) to create a fiber (100) with helical waveguide cores (103), the helical waveguide cores (103) formed from the first peripheral, second peripheral, third peripheral and fourth peripheral doped cores of the plurality of doped cores (206, 222); and
coating the fiber with a coating material (106) having a refractive index that is smaller than a refractive index of the plurality of doped cores 206, 222).

10. The method of claim 9, wherein the coating material (106) is at least partially transparent to ultraviolet light, the method further comprising:
writing fiber Bragg gratings through the coating material (106) and into the helical waveguide cores (102, 103).

11. The method of claim 9, wherein creating the fiber preform (220) further comprises: also depositing the absorber material in interspatial areas (262) between rods of the plurality of stacked rods (204).

## Patentansprüche

1. Ein optischer Fasersensor (100) zur Erfassung dreidimensionaler Gestalten, der zum Betrieb in einem Wellenlängenband ausgelegt ist, wobei der optische Fasersensor (100) Folgendes umfasst:
einen Mantel (104);
eine Vielzahl von Adern (102, 103) in dem Mantel und die sich entlang einer Länge des Fasersensors (100) erstrecken, wobei die Vielzahl von Adern (102, 103) Folgendes einschließt: eine zentrale Ader (102), die als eine abtastende Ader in dem Wellenlängenband verwendet wird, eine erste spiralförmige periphere Ader (103), die als eine abtastende Ader in dem Wellenlängenband verwendet wird, eine zweite spiralförmige periphere Ader (103), die als eine abtastende Ader in dem Wellenlängenband verwendet wird, eine dritte spiralförmige periphere Ader (103), die als eine abtastende Ader in dem Wellenlängenband verwendet wird, und eine vierte spiralförmige periphere Ader, die nicht zum Abtasten in dem Wellenlängenband verwendet wird; und
eine Umhüllung (106), die den Mantel (104) umgibt, wobei die Umhüllung (106) einen kleineren Brechungsindex aufweist als ein Brechungsindex des Mantels (104),
wobei die vierte spiralförmige periphere Ader (103) ein für Licht in dem Wellenlängenband absorbierendes Absorbermaterial umfasst.

2. Fasersensor (100) nach Anspruch 1, wobei die Umhüllung (106) im Wesentlichen aus einem Polymer hergestellt ist und der Mantel Quarzglas umfasst.

3. Fasersensor (100) nach Anspruch 1, wobei die Umhüllung (106) mindestens teilweise transparent für ultraviolettes Licht ist.

4. Fasersensor (100) nach Anspruch 1, wobei das Absorbermaterial eines oder mehrere eines Materials umfasst, das aus der Gruppe ausgewählt ist, die aus Folgenden besteht: Erbium, Ytterbium, Thulium, Neodym, Chrom und Kobalt.

5. Fasersensor (100) nach Anspruch 1, wobei der Mantel (106) und die Vielzahl von Adern (102, 103) aus einem Vorformling (220) von gestapelten Stäben (202, 204, 208) gebildet sind und wobei die zentrale Ader, die erste spiralförmige periphere Ader, die zweite spiralförmige periphere Ader und die dritte spiralförmige periphere Ader aus gestapelten Stäben (202, 204) gebildet sind, die eine dotierte Ader (206) umfassen, und wobei die vierte spiralförmige periphere Ader aus einem gestapelten Stab (204) gebildet ist, der eine dotierte Ader (222) umfasst, die das Absorbermaterial einschließt.

6. Fasersensor (100) nach Anspruch 1, wobei der Mantel (104) auch das Absorbermaterial umfasst.

7. Fasersensor (100) nach Anspruch 6, wobei der Mantel (104) und die Vielzahl von Adern (102, 103) aus einem Vorformling (220, 240) von gestapelten Stäben (202, 204, 208) gebildet sind und wobei das Absorbermaterial durchweg über mindestens einige der gestapelten Stäbe (242) verteilt ist.

8. Fasersensor (100) nach Anspruch 6, wobei der Mantel (104) und die Vielzahl von Adern (102, 103) aus einem Vorformling (220, 260) von gestapelten Stäben (202, 204, 208) gebildet sind, wobei das Absorbermaterial in Zwischenraumbereichen (262) zwischen den gestapelten Stäben (202, 204, 208) abgelagert ist.

9. Ein Verfahren zur Herstellung eines mehradrigen optischen Fasersensors (100) zur Erfassung dreidimensionaler Gestalten, wobei der mehradrige optische Fasersensor (100) zum Betrieb in einem Wellenlängenband ausgelegt ist, wobei das Verfahren Folgendes umfasst:
Erstellen eines Faservorformlings (220) aus einer Vielzahl von gestapelten Stäben (202, 204, 208), wobei der Faservorformling (220) eine Vielzahl von dotierten Adern (206, 222) umfasst, die sich entlang Achsen eines Satzes der Vielzahl von gestapelten Stäben (202, 204) erstrecken, wobei die Vielzahl von dotierten Adern eine zentrale dotierte Ader (206), eine erste periphere dotierte Ader (206), eine zweite periphere dotierte Ader (206), eine dritte periphere dotierte Ader (206) und eine vierte periphere dotierte Ader (222) umfasst, wobei die zentrale, erste periphere, zweite periphere und dritte periphere dotierte Ader (206) als abtastende Adern in dem Wellenlängenband verwendet werden sollen, wobei die vierte periphere dotierte Ader (222) nicht als eine abtastende Ader in dem Wellenlängenband verwendet werden soll, wobei die vierte periphere dotierte Ader (222) erstellt wird, indem ein Dotiermittel auf einer inneren Oberfläche eines Quarzrohrs abgelagert wird und das Rohr dann kollabiert wird, um einen dotierten Stab zu erstellen, wobei das Dotiermittel ein für Licht in dem Wellenlängenband absorbierendes Absorbermaterial umfasst;
Ziehen und gleichzeitiges Drücken des Faservorformlings (220), um eine Faser (100) mit spiralförmigen Wellenleiteradern (103) zu erstellen, wobei die spiralförmigen Wellenleiteradern (103) aus den ersten peripheren, zweiten peripheren, dritten peripheren und vierten peripheren dotierten Adern der Vielzahl von dotierten Adern (206, 222) gebildet sind; und
Umhüllen der Faser mit einem Umhüllungsmaterial (106), das einen Brechungsindex aufweist, der kleiner als ein Brechungsindex der Vielzahl von dotierten Adern (206, 222) ist.

10. Verfahren nach Anspruch 9, wobei das Umhüllungsmaterial (106) mindestens teilweise transparent für ultraviolettes Licht ist, wobei das Verfahren ferner Folgendes umfasst:
Schreiben von Faser-Bragg-Gittern durch das Umhüllungsmaterial (106) und in die spiralförmigen Wellenleiteradern (102, 103).

11. Verfahren nach Anspruch 9, wobei das Erstellen des Faservorformlings (220) ferner Folgendes umfasst: Ablagern des Absorbermaterials auch in Zwischenraumbereichen (262) zwischen Stäben der Vielzahl von gestapelten Stäben (204).

## Revendications

1. Capteur à fibre optique (100) pour une détection de forme tridimensionnelle, configuré pour fonctionner dans une bande de longueurs d'onde, le capteur à fibre optique (100) comprenant :
une gaine (104) ;
une pluralité d'âmes (102, 103) dans la gaine et s'étendant le long d'une longueur du capteur à fibre (100), la pluralité d'âmes (102, 103) contenant une âme centrale (102) utilisée comme âme de détection dans la bande de longueurs d'onde, une première âme périphérique hélicoïdale (103) utilisée comme âme de détection dans la bande de longueurs d'onde, une deuxième âme périphérique hélicoïdale (103) utilisée comme âme de détection dans la bande de longueurs d'onde, une troisième âme périphérique hélicoïdale (103) utilisée comme âme de détection dans la bande de longueurs d'onde, et une quatrième âme périphérique hélicoïdale non utilisée pour la détection dans la bande de longueurs d'onde ; et
un revêtement (106) entourant la gaine (104), le revêtement (106) ayant un indice de réfraction inférieur à un indice de réfraction de la gaine (104),
dans lequel la quatrième âme périphérique hélicoïdale (103) comprend un matériau absorbant qui absorbe la lumière dans la bande de longueurs d'onde.

2. Capteur à fibre (100) selon la revendication 1, dans lequel le revêtement (106) est sensiblement constitué d'un polymère, et la gaine comprend de la silice fondue.

3. Capteur à fibre (100) selon la revendication 1, dans lequel le revêtement (106) est au moins partiellement transparent à la lumière ultraviolette.

4. Capteur à fibre (100) selon la revendication 1, dans lequel le matériau absorbant comprend un ou plusieurs d'un matériau sélectionné dans le groupe constitué de l'erbium, de l'ytterbium, du thulium, du néodyme, du chrome et du cobalt.

5. Capteur à fibre (100) selon la revendication 1, dans lequel la gaine (106) et la pluralité d'âmes (102, 103) sont formées à partir d'une préforme (220) de tiges empilées (202, 204, 208), et dans lequel l'âme centrale, la première âme périphérique hélicoïdale, la deuxième âme périphérique hélicoïdale et la troisième âme périphérique hélicoïdale sont formées à partir de tiges empilées (202, 204) comprenant une âme dopée (206), et dans lequel la quatrième âme périphérique hélicoïdale est formée à partir d'une tige empilée (204) comprenant une âme dopée (222) contenant le matériau absorbant.

6. Capteur à fibre (100) selon la revendication 1, dans lequel la gaine (104) comprend également le matériau absorbant.

7. Capteur à fibre (100) selon la revendication 6, dans lequel la gaine (104) et la pluralité d'âmes (102, 103) sont formées à partir d'une préforme (220, 240) de tiges empilées (202, 204, 208), et dans lequel le matériau absorbant est réparti à travers au moins certaines des tiges empilées (242).

8. Capteur à fibre (100) selon la revendication 6, dans lequel la gaine (104) et la pluralité d'âmes (102, 103) sont formées à partir d'une préforme (220, 260) de tiges empilées (202, 204, 208), le matériau absorbant étant déposé dans des zones interstitielles (262) entre les tiges empilées (202, 204, 208).

9. Procédé de fabrication d'un capteur à fibre optique à plusieurs âmes (100) pour une détection de forme tridimensionnelle, le capteur à fibre optique à plusieurs âmes (100) étant configuré pour fonctionner dans une bande de longueurs d'onde, le procédé comprenant :
la création d'une préforme de fibre (220) à partir d'une pluralité de tiges empilées (202, 204, 208), la préforme de fibre (220) comprenant une pluralité d'âmes dopées (206, 222) s'étendant le long d'axes d'un ensemble de la pluralité de tiges empilées (202, 204), la pluralité d'âmes dopées comprenant une âme dopée centrale (206), une première âme dopée périphérique (206), une deuxième âme dopée périphérique (206), une troisième âme dopée périphérique (206) et une quatrième âme dopée périphérique (222), dans lequel l'âme dopée centrale, la première âme dopée périphérique, la deuxième âme dopée périphérique et la troisième âme dopée périphérique (206) sont destinées à une utilisation comme âmes de détection dans la bande de longueurs d'onde, dans lequel la quatrième âme dopée périphérique (222) n'est pas destinée à une utilisation comme âme de détection dans la bande de longueurs d'onde, dans lequel la quatrième âme dopée périphérique (222) est créée par dépôt d'un dopant sur une surface intérieure d'un tube de silice, puis par affaissement du tube pour créer une tige dopée, le dopant comprenant un matériau absorbant qui absorbe la lumière dans la bande de longueurs d'onde ;
un étirage et une rotation simultanés de la préforme de fibre (220) pour créer une fibre (100) comportant des âmes guides d'ondes hélicoïdales (103), les âmes guides d'ondes hélicoïdales (103) étant formées à partir de la première âme dopée périphérique, de la deuxième âme dopée périphérique, de la troisième âme dopée périphérique et de la quatrième âme dopée périphérique de la pluralité d'âmes dopées (206, 222) ; et
le revêtement de la fibre avec un matériau de revêtement (106) ayant un indice de réfraction qui est inférieur à un indice de réfraction de la pluralité d'âmes dopées (206, 222).

10. Procédé selon la revendication 9, dans lequel le matériau de revêtement (106) est au moins partiellement transparent à la lumière ultraviolette, le procédé comprenant en outre :
l'inscription de réseaux de Bragg sur fibre à travers le matériau de revêtement (106) et dans les âmes guides d'ondes hélicoïdales (102, 103).

11. Procédé selon la revendication 9, dans lequel la création de la préforme de fibre (220) comprend en outre le fait de déposer également le matériau absorbant dans des zones interstitielles (262) entre des tiges de la pluralité de tiges empilées (204).
